# EUROPÄISCHE PATENTANMELDUNG

(11) **EP 1 260 155 A2**
(43) Veröffentlichungstag der Anmeldung: **27.11.2002**
(21) Anmeldenummer: 02010357.8
(22) Anmeldetag: 07.05.2002
(51) Int. Cl.: A47B 77/08

(54) **Küchenmöbel**

(30) Priorität: 17.05.2001 DE 10124170
(71) Anmelder: bulthaup GmbH & Co. KG, 84153 Aich (=Bodenkirchen) (DE)
(72) Erfinder: Langer, Otto, 84494 Neumarkt-Sankt Veit (DE); Haberl, Thomas, 85356 Freising/Attaching (DE); Reiter, Johann, 84155 Bodenkirchen (DE)
(74) Vertreter: Laufhütte, Dieter, Dr.-Ing.

(57) **Zusammenfassung**

Die Erfindung betrifft ein Küchenmöbel, wie Küchenschrank, Küchencontainer, Küchentruhe, Küchenarbeitsplatte oder Küchentisch. Mittels eines unmittelbar innerhalb des Küchenmöbels integrierten Peltierelementes werden Kühl- und oder Wärmeflächen bzw. Kühl- und/oder Wärmefächer gebildet.

## Beschreibung

Die Erfindung betrifft ein Küchenmöbel, wie beispielsweise einen Küchenschrank, Küchencontainer, Küchentruhe, Küchenarbeitsplatte oder Küchentisch.

Es gibt Anwendungsfälle, in denen Lebensmittel kurzfristig in einen gekühlten Bereich von ca. 0°C bis ca. 18°C gelagert werden sollen. Beispielhaft sind hier Obst, Gemüse, Getränke, Torten, kalte Platten, Käse usw. zu nennen. Konventionelle Kühlschränke sind meist schon aus Platzgründen wenig geeignet. So fehlt z.B. die Möglichkeit, Wein liegend sicher zu lagern oder der Platz für einen Tortenteller reicht nicht aus.

Darüber hinaus besteht auch Bedarf in der Küche, beispielsweise Speisen und Teller oder Geschirr zu erwärmen oder für eine bestimmte Zeit warmzuhalten.

Es gibt zwar spezielle Wärmeschränke, aber nicht jede Küche bietet dafür ausreichend Platz, diese Geräte in die Küche zu integrieren. Zum anderen ist es beispielsweise bekannt, in Auszügen von Küchenschränken Kühlboxen zu integrieren, bei denen allerdings ein spezieller Innenbehälter vorzusehen ist. Dieser vorbekannte Kühlbehälter weist den Nachteil auf, daß hier ein hoher Platzbedarf für Kühlung und Isolierung in Kauf zu nehmen ist.

Der Erfindung liegt die Aufgabe zugrunde, ausgehend von herkömmlichen Küchenmöbeln, wie Schränken, Containern, Truhen, Arbeitsplatten oder Tischplatten, Wärme- und Kältezonen zu schaffen, wobei die benötigten Aggregate zur Erzeugung der Wärme- und Kältezonen möglichst nur wenig Platz beanspruchen sollen.

Erfindungsgemäß wird diese Aufgabe mittels des Patentanspruchs 1 gelöst. Hier wird unmittelbar innerhalb des Küchenmöbels ein Peltierelement integriert, so daß hier Kühl- und/oder Wärmeflächen bzw. Kühl- und/oder Wärmefächer gebildet werden. Dieses Wärme- und Kälteaggregat ist für eine unmittelbare Integration in die Küchenmöbel geeignet, beispielsweise Schränke, die mit Schüben, Auszügen, Türen, Klappen, Fachböden, Schiebetüren, Rolladen oder Deckeln ausgestattet sind. Beim Einbau der Peltierelemente in Arbeitsflächen, in Tischplatten oder Gehäusen, die eine tischähnliche Einbausituation darstellen, entstehen temperierbare Flächen, die zum Zubereiten oder kurzfristigen Aufbewahren geeignet sind. Bei der Verwendung von Abdeckhauben aus Kunststoff, Glas, Metall, Folie oder Mischungen davon entsteht aus der Wärme-/Kälteplatte eine dreidimensionale Wärme-/Kältezone oder auch Kältefach genannt.

Vorteilhafte Ausgestaltungen der Erfindung ergeben sich aus den sich an den Hauptanspruch anschließenden Unteransprüchen.

Demnach kann das Peltierelement aus insbesonders großflächigen und flach ausgebildeten Kühl- bzw. Wärmkörpern aufgebaut sein.

Besonders vorteilhaft kann die Wärmeseite und die Kälteseite des Peltierelementes über einen Schalter umschaltbar sein. Hierdurch kann durch Betätigung des Schalters eine Kühlfläche in eine Wärmefläche umgewandelt werden und ein Kühlfach kann in ein Wärmefach umfunktioniert werden.

Besonders vorteilhaft kann das Küchenmöbel in Form eines Küchentisches oder einer Küchenarbeitsplatte in der Tischplatte bzw. Arbeitsplatte flächenbündig das Peltierelement aufnehmen.

Ist das Küchenmöbel ein Küchenschrank, kann zumindest ein Peltierelement in einem Mittelboden derart angeordnet sein, daß eine Kühl- oder Wärmefläche in den Raum oberhalb des Mittelbodens ragt und eine Wärme- oder Kühlfläche in den Raum unterhalb des Mittelbodens ragt. Hier kann also ein Element dazu ausgenutzt werden, einerseits ein Kühlfach zu bilden und andererseits ein benachbartes Wärmefach. Besonders vorteilhaft ist das untere Fach als Kühlfach ausgebildet, während das obere Fach als Wärmefach ausgebildet ist, da hier gleichzeitig der Effekt berücksichtigt wird, daß warme Luft nach oben steigt, während kühle Luft nach unten fällt.

Soweit das Küchenmöbel als Küchenschrank ausgebildet ist, kann das Peltierelement im Unterboden, Oberboden oder in der Rückwand angeordnet sein.

Im zu kühlenden bzw. wärmenden Raum kann ein Lüfter zur Verteilung der an der Fläche des Peltierelements entstehenden Wärme bzw. Kälte angeordnet sein.

Eine andere bevorzugte Ausführungsform ermöglicht es, daß ein auf die Arbeitsplatte abklappbares Nischenelement vorhanden ist, wobei innerhalb des Nischenelementes ein Peltierelement integriert ist. Damit lassen sich Wärme- oder Kälteplatten, die in tischähnliche Konstruktionen eingebaut sind durch Hochklappen in der Nischenwand oder an den Seitenwänden platzsparend unterbringen, wenn sie nicht benötigt werden.

Vorteilhaft läßt sich das Küchenmöbel auch in Form eines Müllauszugs, Müllschranks oder Müllfachs dadurch ausgestalten, daß die Kühlung des Mülls mittels der Kühlfläche des Peltierelements erfolgt. Eine Kühlung des Mülls ist insbesondere für feucht-heiße Länder dringend erforderlich.

Schließlich läßt sich gemäß einer weiteren vorteilhaften Ausgestaltung der Erfindung ein Küchenmöbel in Form eines Speisekammerschrankes mittels Peltierelementes ausstatten, wobei die Wärme von der Wärmeseite über Lüfter abführbar ist. In diesem Fall muß zwar die Wärme abgeführt werden, jedoch kann man Temperaturzonen mit unterschiedlichen Temperaturen wählen.

Weitere Einzelheiten und Vorteile der Erfindung werden anhand von in der Zeichnung dargestellten Ausführungsbeispielen näher erläutert. Es zeigen:
- Fig. 1-4:: eine Darstellung einer ersten Ausführungsvariante eines erfindungsgemäßen Küchenmöbels mit abklappbarem Nischenelement,
- Fig.5:: eine zweite Ausführungsvariante eines erfindungsgemäßen Küchenschranks,
- Fig.6:: einen erfindungsgemäßen Küchentisch gemäß einer dritten Ausführungsvariante der Erfindung,
- Fig. 7-15:: weitere unterschiedliche Ausgestaltungen von erfindungsgemäßen Küchenschränken.

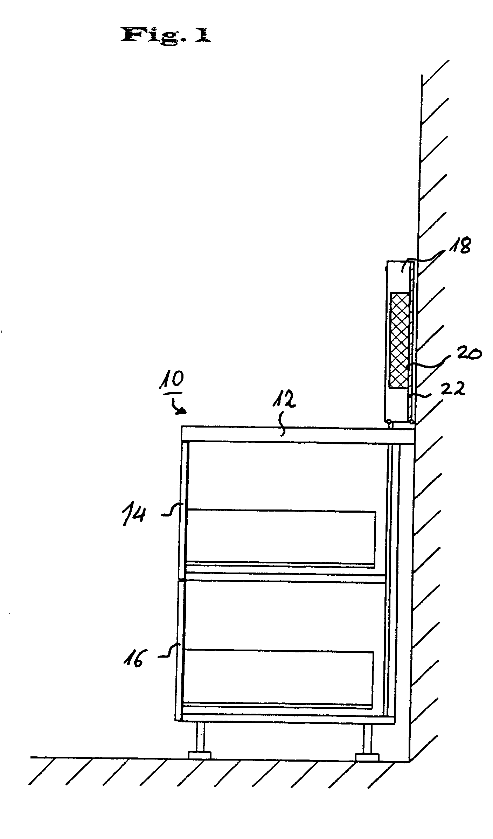

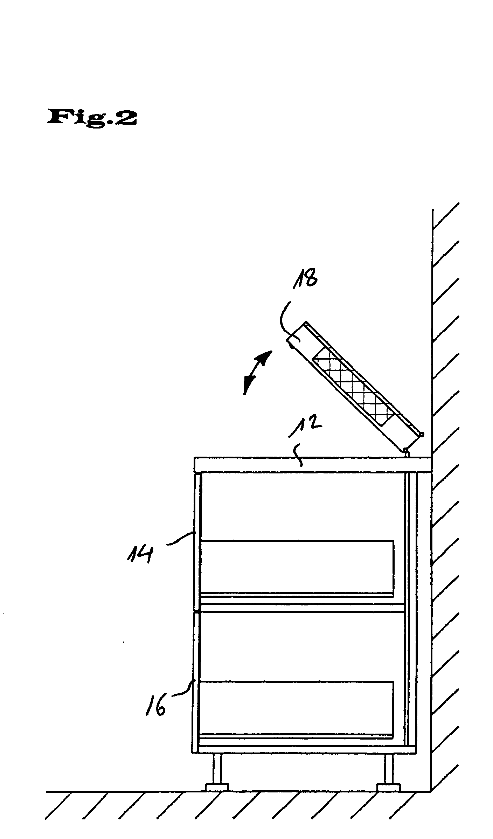

In den Figuren 1 bis 4 ist ein im wesentlichen handelsüblicher Küchenschrank 10 dargestellt, der eine Arbeitsplatte 12 und zwei Einschübe 14 bzw. 16 aufweist. An der Arbeitsplatte 12 ist ab- bzw. aufklappbar ein flächiges Nischenelement 18, in welchem ein Peltierelement 20 integriert ist, angelenkt. Das Peltierelement 20 ist an sich bekannter Bauart und weist im hier dargestellten Ausführungsbeispiel auf der einen Seite eine große ebene Fläche 22 auf, die gleichzeitig die Oberfläche des Nischenelementes bildet. Das Nischenelement 18 kann, wie in Figur 2 dargestellt ist, auf die Arbeitsplatte 12 abgeklappt werden. In diesem Zustand kann es zum Kühlen von Speisen oder aber nach entsprechender Umschaltung zum Wärmen von Speisen verwendet werden. Hier nicht mehr dargestellt ist die standardmäßig vorzusehende Stromversorgung für das Peltierelement und den elektronischen Trafo, der im Aggregat integriert ist. Weiterhin ist in den Figuren 1 bis 4 nicht dargestellt, daß ein Schalter zum Umpolen von Kälte- und Wärmefläche vorhanden ist. Somit kann die Kältefläche 22 durch entsprechende Umpolung mittels des Schalters auch in eine Wärmefläche umgewandelt werden.

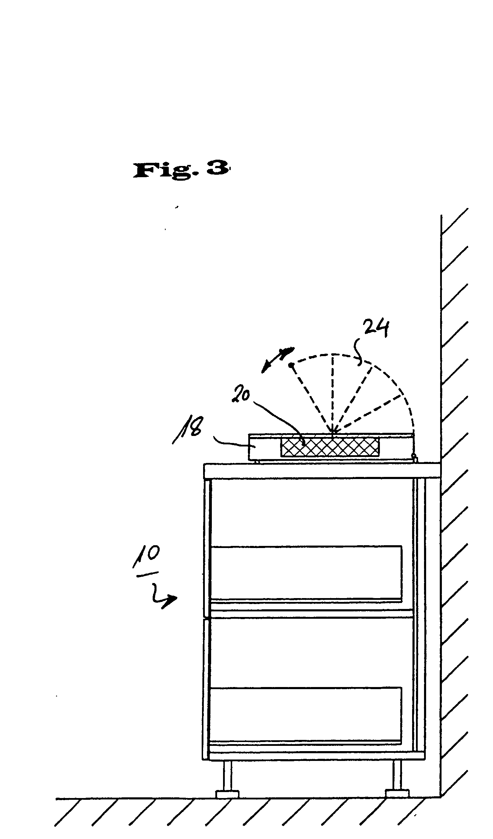

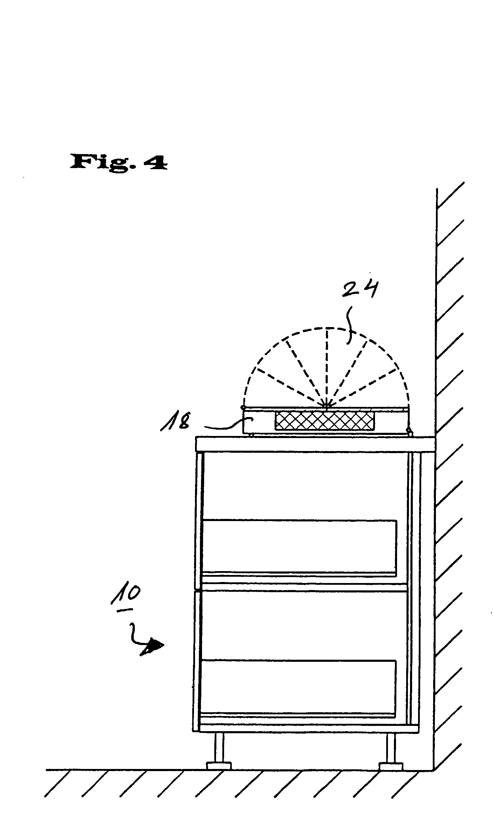

In den Figuren 3 und 4 ist jeweils schematisch dargestellt, wie das abgeklappte Nischenelement mittels einer sektional aufgebauten halbzylindrischen Abdeckhaube 24 verschließbar ist. Hierdurch kann die Kühl- bzw. Wärmefläche in ein Kühl- bzw. Wärmefach verwandelt werden. Der Vorteil der Ausführungsvariante gemäß der Figuren 1 bis 4 besteht darin, daß das Nischenelement 18 nur bei Bedarf auf die Arbeitsplatte abklappbar ist. Ansonsten kann es in eine entsprechende Nische oder zur Seite geklappt werden, wie dies in Figur 1 dargestellt ist, so daß die Arbeitsplatte 12 für Küchenarbeiten zur Verfügung steht.

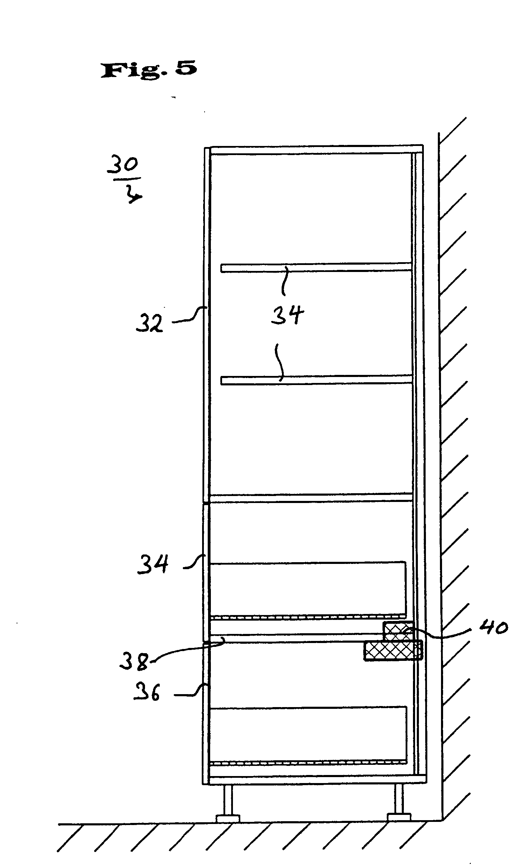

In der Figur 5 ist ein Küchenschrank 30 dargestellt, dessen oberer Teil als konventioneller Schrank mit Schranktüren 32 und Schrankböden 34 ausgebildet ist. Im unteren Bereich weist der Schrank 30 Schubfächer 34 und 36 auf, die mittels eines Bodens 38 voneinander getrennt sind. Im Boden integriert ist ein Peltierelement 40 dessen Warmseite in das Schubfach 34 ragt, während die Kaltseite in das Schubfach 36 ragt. Somit ist das Schubfach 34 als Kühlfach ausgebildet, während das Schubfach 36 als Wärmefach ausgebildet ist. Es ist hier festzuhalten, daß die Schubfächer keinerlei Isolierungen aufweisen, die den Platz innerhalb des Schubfaches einschränken. Vielmehr reicht die Kühl- bzw. Wärmeleistung des Peltierelementes 40 vollkommen aus, die gewünschten Temperaturen einzustellen. In nicht dargestellter Art und Weise kann auch hier wieder ein Schalter vorgesehen sein, der durch Umpolung die Warmseite mit der Kaltseite im Peltierelement vertauscht, so daß hier das Fach 34 auch als Kühlfach ausgelegt sein kann und das Fach 36 auch als Wärmefach.

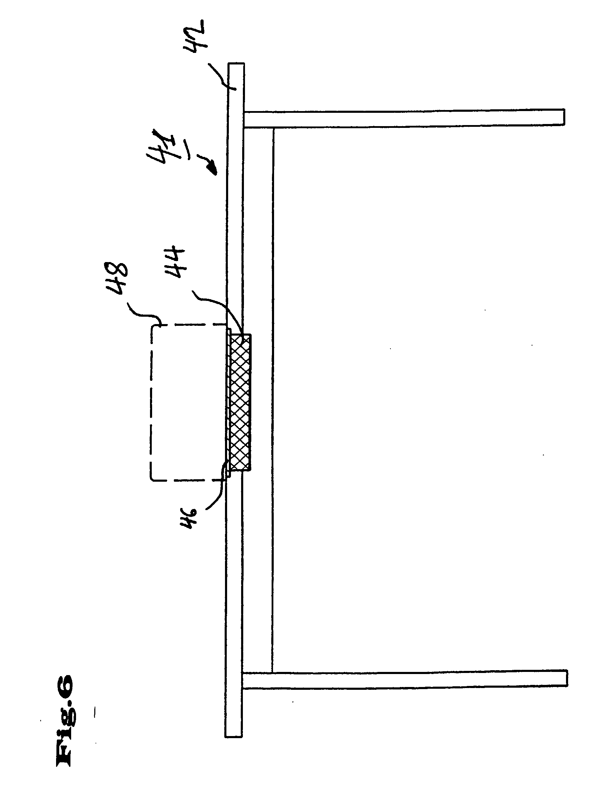

In Figur 6 ist eine weitere Ausgestaltung der Erfindung gezeigt, in der in einem Tisch 41 innerhalb der Tischplatte 42 ein Peltierelement 44 integriert ist, dessen Kalt- bzw. Warmseite 46 flächenbündig mit der Tischplatte 42 abschließt. Um diese Wärme- bzw. Kühlfläche in einen Wärme- bzw. Kühlraum umzuwandeln, kann der Bereich des flächigen Peltierelementes mittels einer Haube 48 abgedeckt werden.

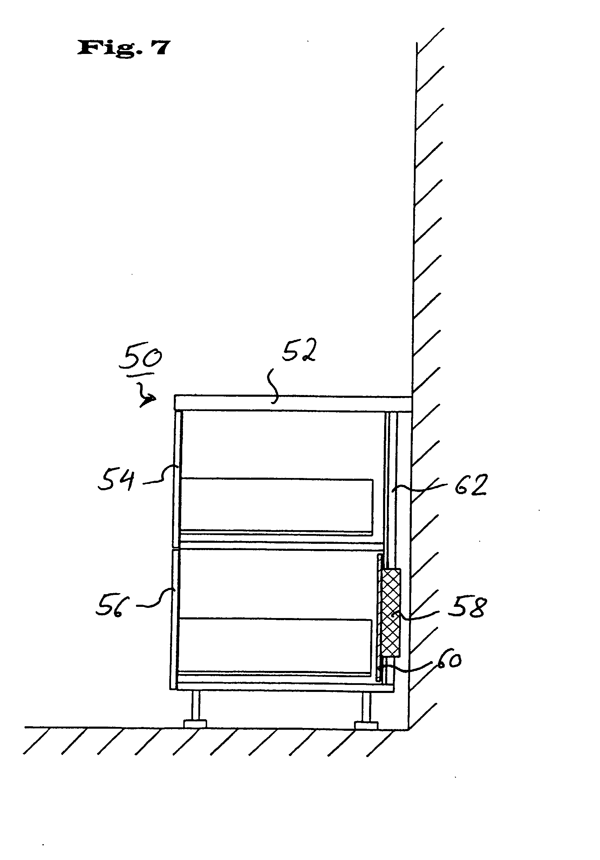

In der Ausführungsvariante gemäß Figur 7 ist ein Küchenschrank 50 mit Arbeitsplatte 52 und zwei Einschüben 54 und 56 dargestellt, wobei in der Rückwand im Bereich des Schubfachs 56 ein Peltierelement 58 derart angeordnet ist, daß eine flächige Seite des Peltierelements 60 in das Schubfach 56 hineinragt, während der hintere Teil des Peltierelements frei aus der Rückwand 62 des Küchenschrankes 50 herausragt. Wird das Schubfach 56 beispielsweise als Kühlfach verwendet, erfolgt die Kühlung ausgehend von der Fläche 60 des Peltierelements 58, während an der gegenüberliegenden Seite die Wärme abgeführt wird. Zu einem Ausgleich des Temperaturgefälles kann ein Lüfter innerhalb des Schubfachs 56 vorgesehen werden. Um die Konvektion mit der Außenseite zu verhindern, können im Wandbereich der Öffnung des Schubfachs Dichtungen vorgesehen sein, die einen dichten Abschluß im geschlossenen Zustand des Schubfachs 56 ermöglichen.

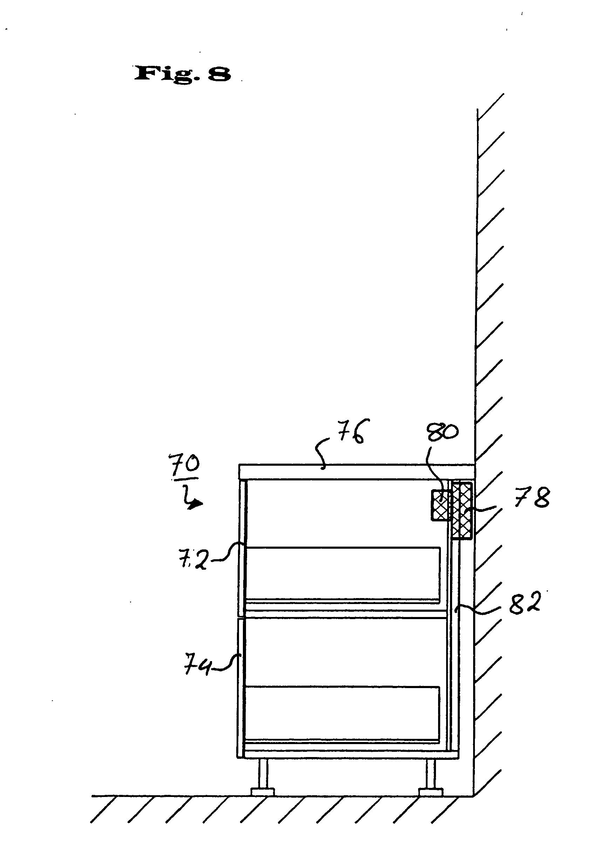

Figur 8 zeigt einen Küchenschrank 70, der ähnlich wie der Küchenschrank gemäß Figur 7 zwei Schubfächer 72 und 74 sowie eine Arbeitsplatte 76 aufweist. Im oberen Schubfach ist im hinteren Bereich ein Peltierelement 78 integriert. Das Peltierelement 78 reicht mit seiner Wärmeseite 80 in das Schubfach 72 hinein, so daß hier ein Wärmefach gebildet ist, während die entsprechende Kälte über die Rückseite des Peltierelementes, die über die Rückwand 82 des Küchenschrankes 70 hinausragt, abführbar ist.

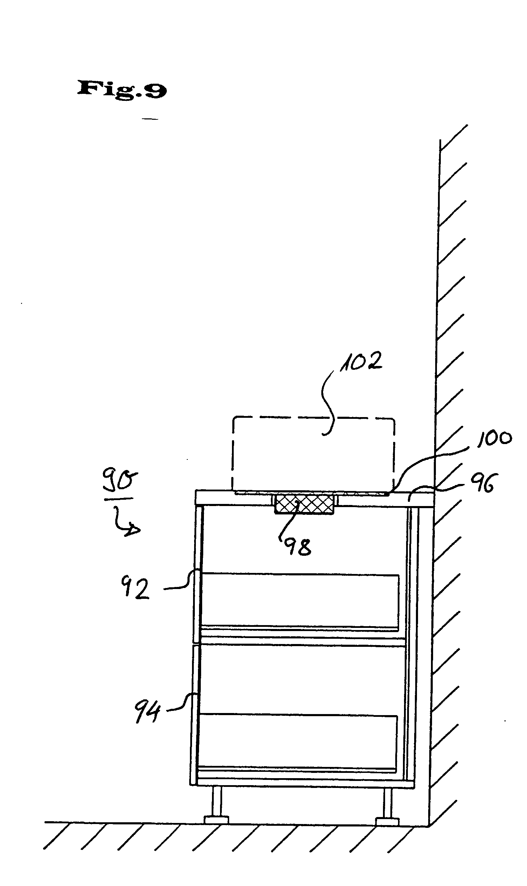

In Figur 9 ist ein Küchenschrank 90 mit zwei Ausschüben 92 und 94 dargestellt, in dessen Arbeitsplatte 96 ein Peltierelement 98 derart eingesetzt ist, daß seine großflächige Kühlseite 100 flächenbündig in die Arbeitsplatte 96 eingelassen ist, während die Warmseite durch eine Öffnung in der Arbeitsplatte in das Schubfach 92 hineinragt und somit das Schubfach 92 gleichzeitig zu einem Wärmefach macht. Die Kältefläche 100 des Peltierelements 98 kann über eine Haube 102 in einen Kälteraum verwandelt werden.

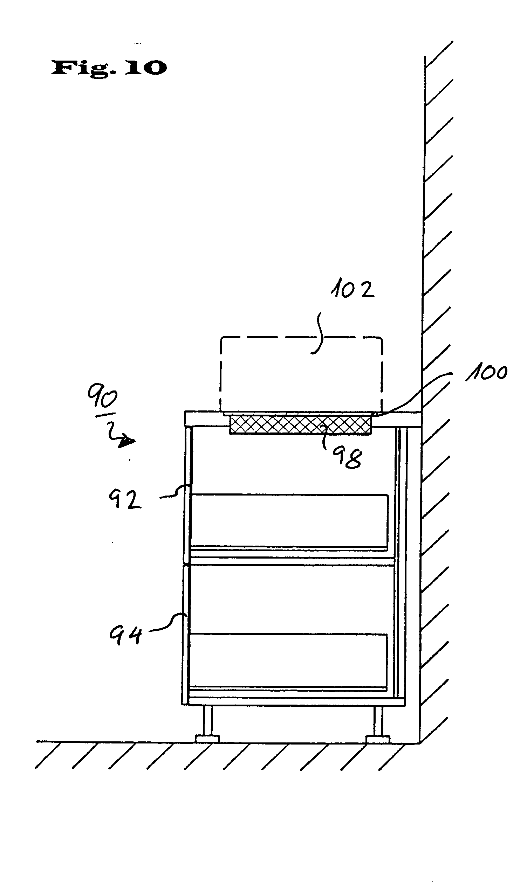

In Figur 10 ist eine der Figur 9 ähnliche Schrankgestaltung verwirklicht, wobei hier die gleichen Elemente mit gleichen Bezugsziffern versehen sind. Hier ergibt sich aber, daß das Peltierelement 98 eine vergleichsweise andere Formgebung hat. Hier ist der Bereich der Warmseite vergleichsweise zu der Ausgestaltung der Figur 9 größer ausgebildet, so daß hier die Wärme gleichmäßiger im Wärmefach 92 verteilt wird.

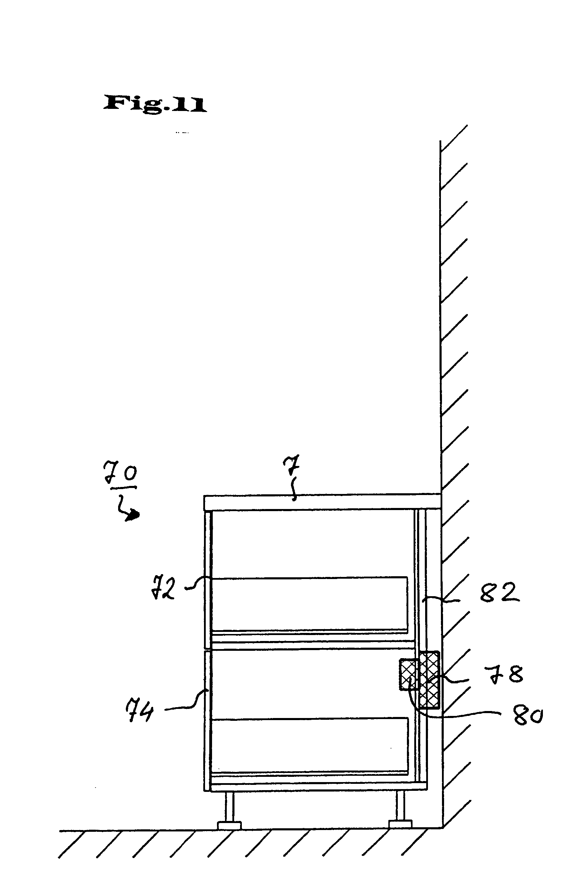

Figur 11 zeigt eine ähnliche Ausführungsvariante wie Figur 8, so daß auch hier die gleichen Bezugsziffern für den Küchenschrank 70 und die Teile des Küchenschrankes gewählt sind. Im hier vorliegenden Fall ist jedoch das Peltierelement im Bereich des unteren Schubfachs angeordnet, so daß hier das Schubfach 74 als Wärmefach ausgebildet ist.

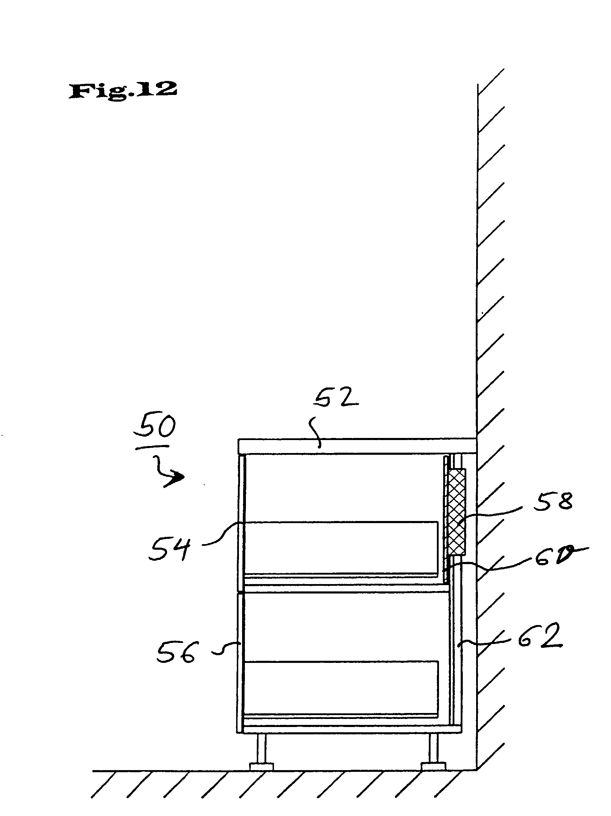

Demgegenüber ist in der Ausführungsvariante gemäß Figur 12 eine ähnliche Ausgestaltung wie in der Bauvariante gemäß Figur 7 gezeigt, wobei auch hier wieder gleiche Bezugszahlen gewählt sind, wie in der Figur 7. Hier ist im Schrank 50 das Schubfach 54 als Kältefach dadurch ausgebildet, daß das Peltierelement 58 mit seiner großflächigen Kälteseite 60 im oberen Schubfach 54 in die Rückwand 62 integriert ist.

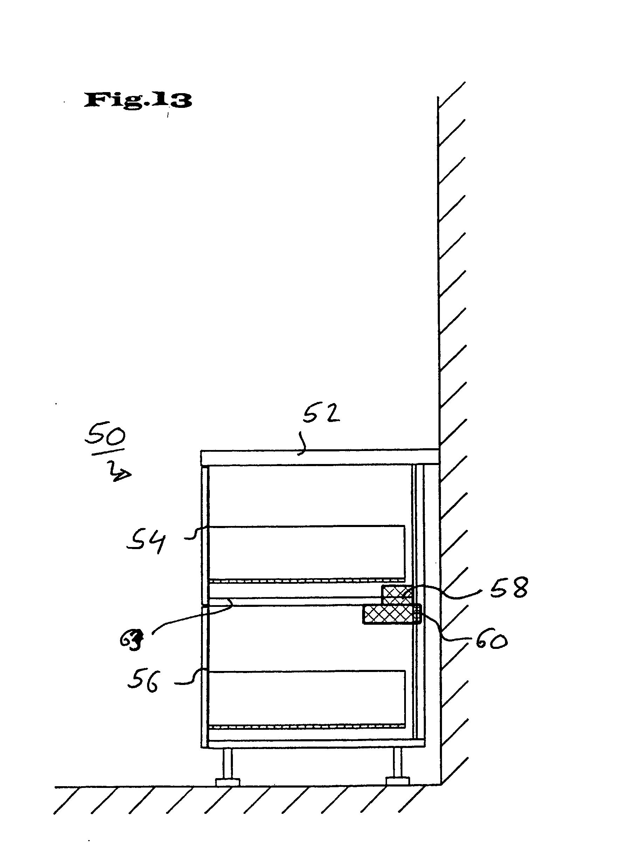

In den Figuren 13 bis 15 sind ebenfalls Küchenschränke 50 mit zwei Schubfächern 54, 56 und einer Arbeitsplatte 52 dargestellt. Die Schubfächer 54 und 56 werden durch einen Zwischenboden 63 voneinander getrennt. In der Ausführungsvariante gemäß Figur 13 ist das Peltierelement 58 im Zwischenboden 63 angeordnet, wobei die Kaltseite 60 in das untere Schubfach 56 hineinragt, so daß das Schubfach 56 als Kältefach ausgebildet ist, während die gegenüberliegende Warmseite in das Schubfach 54 hineinragt, so daß dieses als Wärmefach ausgebildet ist. Durch einen hier nicht näher dargestellten Schalter lassen sich die Kaltseite und Warmseite des Peltierelementes umpolen, so daß die Schubladen 56 bzw. 54 jeweils zu einem Wärmefach bzw. Kältefach werden.

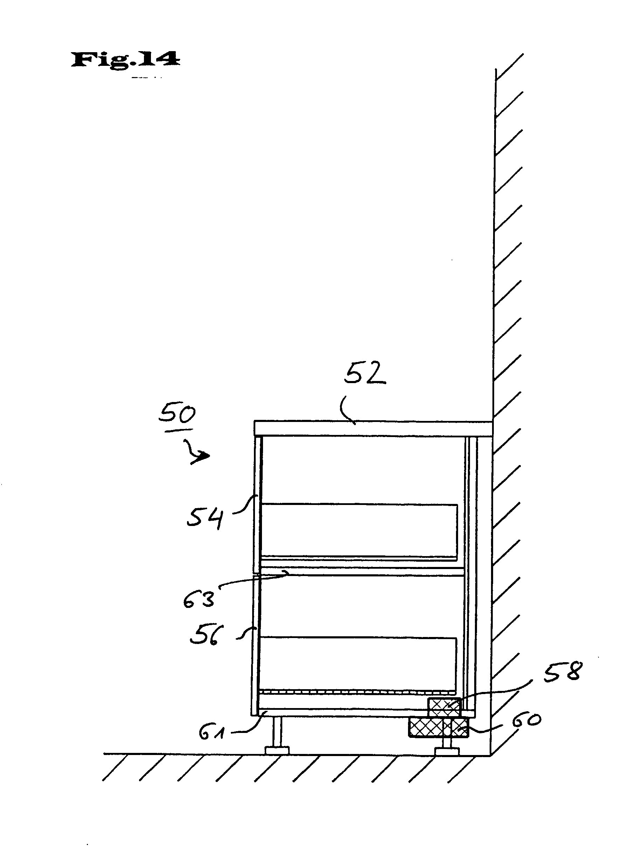

In Figur 14 ist eine Abwandlung der Figur 13 dahingehend gezeigt, daß das Peltierelement hier in dem Boden 61 des unteren Schubfachs eingelassen ist. Hier ragt die Wärmeseite in das Schubfach 56 herein, so daß dies als Wärmefach ausgebildet ist, während das Fach 54 nicht temperiert ist. Die Kaltseite des Peltierelements 58 ragt in die Umgebung des Schrankes, so daß die Kältewirkung innerhalb des Schrankes nicht genutzt wird. Auch hier läßt sich durch einen nicht näher dargestellten Schalter die Warmseite des Peltierelements in eine Kaltseite umwandeln.

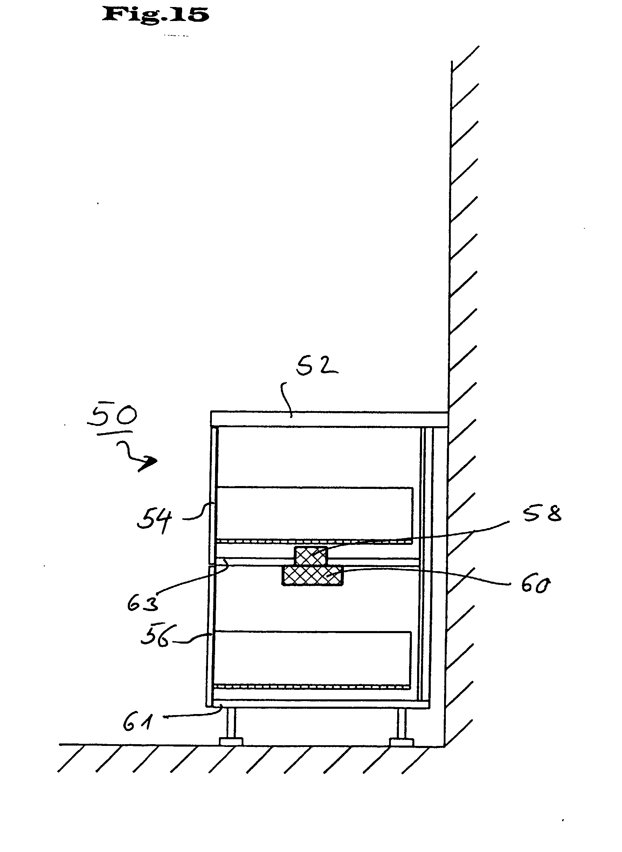

In Figur 15 ist ein Küchenschrank 50 in ähnlicher Anordnung verglichen zu derjenigen gemäß Figur 13 dargestellt. Auch hier ist das Peltierelement 58 in der Zwischenwand 63, die die Schubfächer 56 und 54 trennt, integriert. Allerdings ist hier das Peltierelement in der Mitte der Zwischenwand 63 integriert, während es in der Ausführungsvariante gemäß Figur 13 im Rückwandbereich des Küchenschranks angeordnet war.

## Patentansprüche

1. Küchenmöbel, wie Küchenschrank, Küchencontainer, Küchentruhe, Küchenarbeitsplatte oder Küchentisch,
**dadurch gekennzeichnet,**
**daß** mittels eines unmittelbar innerhalb des Küchenmöbels integrierten Peltierelementes Kühl- und/oder Wärmeflächen bzw. Kühl- und/oder Wärmefächer gebildet werden.

2. Küchenmöbel nach Anspruch 1, **dadurch gekennzeichnet, daß** die aus dem Peltierelement bestehenden Kühl- bzw. Wärmkörper großflächig und flach ausgebildet sind.

3. Küchenmöbel nach Anspruch 1 oder 2, **dadurch gekennzeichnet, daß** die Wärmeseite und die Kälteseite des Peltierelementes über einen Schalter umschaltbar sind.

4. Küchenmöbel nach einem der Ansprüche 1 bis 3 in Form eines Küchentisches oder einer Küchenarbeitsplatte, **dadurch gekennzeichnet, daß** in der Tischplatte bzw. Arbeitsplatte flächenbündig das Peltierelement eingesetzt ist.

5. Küchenmöbel nach einem der Ansprüche 1 bis 3 in Form eines Küchenschranks, **dadurch gekennzeichnet, daß** zumindest ein Peltierelement in einem Mittelboden derart angeordnet ist, daß eine Kühl- oder Wärmefläche in den Raum oberhalb des Mittelbodens ragt und eine Wärme- oder Kühlfläche in den Raum unterhalb des Mittelbodens ragt.

6. Küchenmöbel nach einem der Ansprüche 1 bis 3 in Form eines Küchenschrankes, **dadurch gekennzeichnet, daß** das Peltierelement im Unterboden, Oberboden oder in der Rückwand angeordnet ist.

7. Küchenmöbel nach Anspruch 5 oder Anspruch 6, **dadurch gekennzeichnet, daß** im zu kühlenden bzw. wärmenden Raum ein Lüfter zur Verteilung der an der Fläche des Peltierelements entstehenden Wärme bzw. Kälte angeordnet ist.

8. Küchenmöbel nach einem der Ansprüche 1 bis 7, **dadurch gekennzeichnet, daß** es eine Arbeitsplatte mit einem auf diese abklappbaren Nischenelement aufweist, wobei innerhalb des Nischenelementes eine Peltierelement integriert ist.

9. Küchenmöbel nach Anspruch 8, **dadurch gekennzeichnet, daß** das auf die Arbeitsplatte abklappbare Nischenelement mittels einer sektional aufgebauten Abdeckhaube verschließbar ist.

10. Küchenmöbel nach einem der vorangehenden Ansprüche in Form eines Müllauszugs, Müllschranks oder Müllfachs, **dadurch gekennzeichnet, daß** die Kühlung des Mülls mittels der Kühlfläche des Peltierelementes erfolgt.

11. Küchenmöbel nach einem der vorangehenden Ansprüche in Form eines Speisekammerschrankes, **dadurch gekennzeichnet, daß** in den Zwischenböden des Speisekammerschranks Peltierelemente zum Kühlen eingebaut werden, wobei die Wärme von der Wärmseite über Lüfter abführbar ist.
